# EUROPÄISCHE PATENTANMELDUNG

(11) **EP 2 503 170 A1**
(43) Veröffentlichungstag der Anmeldung: **26.09.2012**
(21) Anmeldenummer: 12001985.6
(22) Anmeldetag: 21.03.2012
(51) Int. Cl.: F16D 1/116, F16B 21/18

(54) **Verbindungsanordnung einer Welle-Nabe-Verbindung**

(30) Priorität: 21.03.2011 DE 102011014621
(71) Anmelder: Ifa Technologies GmbH, 39340 Haldensleben (DE)
(72) Erfinder: Pastoors, Stefan, 06766 Bitterfeld-Wolfen (DE); Langer, Gerald, 39345 Bülstringen (DE)
(74) Vertreter: Schuster, Müller & Partner

(57) **Zusammenfassung**

Die Erfindung geht aus von einer Verbindungsanordnung einer Welle-Nabe-Verbindung, beispielsweise der Verbindung zwischen einer Getriebewelle und einem Gelenk, mit einem in Längsrichtung geteilten radial elastisch verformbaren Sicherungselement, das in Nuten von Welle und Nabe formschlüssig eingreift.

Erfindungsgemäß weist die Welle (1) eine breite Nut (4) auf, die die Nabe (2) lediglich teilweise überragt. Das Sicherungselement ist als Sicherungsring (3) oder Buchse (12, 19) ausgebildet und zumindest abschnittsweise in axialer Richtung über die Nabe (2) hinaus in die Nut (4) der Welle (1) hineinragend verbreitert.

Diese Verbindungsanordnung ist für eine größere Typenbreite von Welle-Nabe-Verbindungen anwendbar. Die Gestaltung der äußeren Form der Nabe unterliegt keinerlei Einschränkungen, die durch die Anordnung von Außennuten für das Sicherungselement bedingt wäre. Der über die Nabe hinausragende Bereich der Sicherungselemente ist mit an sich üblichen Werkzeugen greifbar, um den Sicherungsring (3) oder die Buchsen (12, 19) so weit zusammenzudrücken, dass die Well-Nabe-Verbindung ohne Beschädigung irgendeines Teils dieser Verbindung gelöst werden kann.

## Beschreibung

### Stand der Technik

Die Erfindung geht aus von einer Verbindungsanordnung einer Welle-Nabe-Verbindung, beispielsweise der Verbindung zwischen einer Getriebewelle und einem Gelenk, mit einem Sicherungselement zur Sicherung der axialen Lage von Welle und Nabe zueinander, nach dem Oberbegriff der Ansprüche 1, 6 oder 10.

Zur axialen Sicherung von Welle-Nabe-Verbindungen werden elastisch verformbare Sicherungselemente verwendet, die in Nuten von Welle und Nabe so eingepasst sind, dass sie bis zu einer vorgegebenen Axialkraft eine axiale Verschiebung zwischen Welle und Nabe verhindern. Häufig werden derartige Verbindungsanordnungen in Gelenkwellen von Kraftfahrzeugen eingesetzt, um entweder Komponenten von Gelenkwellen untereinander oder die Gelenkwellen beispielsweise mit einer getriebe- oder differentialseitigen Welle zu verbinden. Dabei kommt es auf eine einfache Montage und Demontage, möglichst ohne Sonderwerkzeuge, mit geringem Kraftaufwand an.

Die einfachste Form eines Sicherungselements ist der Sprengring, der in eine Nut der Welle sowie eine in gleicher axialer Position befindliche Nut in der Nabe eingepasst ist. Dabei ist der Querschnitt der Nut der Nabe trapezförmig mit einem etwas breiteren Nutgrund ausgebildet und ihr Tiefenmaß größer als der Radius des Sprengrings gewählt, so dass sich an der Trennfuge von Welle und Nabe eine Kippkante bildet, die im Fall einer axialen Krafteinwirkung auf den Sprengring dessen Herausgleiten aus der Nut der Nabe verhindert (EP 2 053 256 A2). Der Nachteil dieser Lösung besteht darin, dass sie nur für solche Welle-Nabe-Verbindungen geeignet ist, die genau axial übereinander positionierte Nuten mit annähernd gleichem Querschnitt aufweisen. Nachteilig ist aber vor allem, dass eine derartige Verbindungsanordnung nicht mehr ohne Zerstörung des Sicherungselements lösbar ist, wobei bei der gewaltsamen Demontage auch Teile der Nutflanken von Welle und Nabe Schaden nehmen.

Bei einer Verbindungsanordnung zur drehfesten Verbindung von Komponenten im Antriebsstrang eines Fahrzeugs, nämlich einer Welle oder eines wellenzapfens mit einer Innennabe eines Gelenks, ist zusätzlich zu dem in die Nuten des Wellenzapfens und der Innennabe einrastbaren Sicherungsring eine Sicherungseinrichtung in Form einer Rasthülse zum Halten des Sicherungsrings in seiner eingerasteten Position vorgesehen. Diese Rasthülse ist U-förmig ausgebildet und weist zwei stegartige Sicherungsvorsprünge auf, die in zusätzlich in dem Wellenzapfen sowie am Außendurchmesser der Innennabe vorhandene Nuten einrasten und die Welle und die Innennabe axial gegeneinander fixieren, wenn der Sicherungsring in die Nut der Innennabe eingerastet ist. Der Sicherungsring ist geschlitzt ausgeführt und besitzt einen rechteckigen Querschnitt. Zur leichteren Demontage ist er an seiner der Welle zugewandten Stirnfläche mit einer Fase versehen. Die Rasthülse wird in radialer Richtung auf die Verbindungsanordnung aufgesteckt und über Rastnasen im Bereich ihrer Sicherungsvorsprünge auf dem Wellenzapfen bzw. der Innennabe verrastet (WO 2009/012767 A2). Der Nachteil dieser Verbindungsanordnung besteht auch hier darin, dass sie auf Welle-Nabe-Verbindungen beschränkt ist, die genau axial übereinander positionierte Nuten mit annähernd gleichem Querschnitt aufweisen. Die zusätzliche Rasthülse erfordert einen erhöhten Fertigungs- und Montage- bzw. Demontageaufwand. Zur Demontage ist ein Spezialwerkzeug erforderlich, das in einem speziell dafür zwischen Welle und Nabe vorgesehenen Demontagespalt angesetzt werden muss. Außerdem muss die Nabe in jedem Fall eine Außennut aufweisen.

Bei einer anderen Verbindungsanordnung zwischen einem Wellenzapfen und einem Gleichlaufdrehgelenk ist eine mindestens einen elastischen Bereich aufweisende geschlossene Verspannhülse vorgesehen, die mit ihren radial ausgebildeten Rastlaschen in Außennuten des Wellenzapfens und des Gelenkinnenteils des Gleichlaufdrehgelenks einrasten. Die elastische Ausbildung der Verspannhülse wird durch über den gesamten Umfang verteilte axial und/oder radial verlaufende Ausnehmungen erreicht (DE 10 2009 016 066 A1, DE 10 2009 020 981 A1). Auch bei dieser Verbindungsanordnung muss die Nabe eine Außennut aufweisen. Eine Demontage ist mit einem Spezialwerkzeug möglich, mit dem die Rastlaschen aus der Nut herausgedrückt werden, wobei die Demontagekraft größer ist als die im Betriebszustand auftretenden maximalen Axialkräfte und eine Beschädigung der Baueile nicht ausgeschlossen ist.

Bekannt ist ferner eine axiale Befestigungsvorrichtung für ein Maschinenelement, das auch bei hohen axialen Vorspannungen die Ausübung von Radialkräften bzw. Kippmomenten auf das zu befestigende Maschinenelement verhindert. Das Maschinenelement, insbesondere ein Wälzlagerring, ist auf einer Welle unter axialer Vorspannung mit Hilfe eines geteilten Rings befestigt. Der Ring liegt auf der einen Seite mit seiner Stirnseite an der Flanke einer in der Welle angebrachten Nut und auf der anderen Seite an einer Flanke der in dem zu befestigenden Maschinenelement befindlichen Ringaussparung an. Im Querschnitt ist der Ring V-förmig ausgebildet, wobei der V-förmige Teil weder das Maschinenelement noch die Welle berührt (DE 82 02 674 U1).

Eine anderweitige axiale Wellensicherung für eine Differentialanordnung besteht aus einem elastischen Körper mit einer konischen Grundform. Er weist entlang seines Umfangs eine Vielzahl von länglichen axialen Aussparungen und an seiner im Durchmesser kleineren Stirnseite einige radial nach innen gerichtete Zapfen auf, die in eine umlaufende Nut der Welle eingreifen. Mit seiner gegenüberliegenden Stirnfläche größeren Durchmessers liegt die Wellensicherung an einer Nutflanke eines Stirnrades der Differentialanordnung an (US 3,527,120).

Schließlich ist eine Sicherungsvorrichtung für eine Keilwellen-Nabenbefestigung in einem Gleichlaufgelenk bekannt, die aus einem geteilten, in seinem Querschnitt V-förmigen Ring besteht. Der Ring weist drei Anlageflächen auf, von denen zwei durch die Schenkel des V-förmigen Querschnitts gebildet werden und die dritte sich an das freie Ende des einen Schenkels des V's anschließt und im montierten Zustand parallel zur Achse der Welle verläuft. Die beiden den V-förmigen Querschnitt bildenden Schenkel sind flexibel zueinander beweglich. Die Keilwelle weist eine umlaufende Nut auf, deren der Keilverzahnung zugewandte Flanke konisch ausgebildet und an der der freie Schenkel des Rings anliegt. Sein anderer das V bildende Schenkel liegt an einer ebenfalls konisch ausgebildeten Innenfläche einer in die Nabe eingebrachten inneren Ausnehmung an, die außerdem eine breite koaxial verlaufende Innenfläche aufweist, an der die dritte Anlagefläche des Rings anliegt. Der Ring liegt außerdem mit seinen ringförmigen Stirnflächen an der der konischen Anlagefläche jeweils gegenüberliegenden senkrecht zur Achse verlaufenden Nutflanke der Nut der Keilwelle bzw. der inneren Ausnehmung der Nabe an, so dass er eine axiale Relativbewegung zwischen Keilwelle und Nabe verhindert (US 6,390,925 B1).

### Die Erfindung und ihre Vorteile

Die erfindungsgemäße Verbindungsanordnung in Verbindung mit den zugehörigen Sicherungselementen mit den kennzeichnenden Merkmalen der Ansprüche 1, 6 oder 10 hat demgegenüber den Vorteil, dass die Sicherungselemente für eine größere Typenbreite von Welle-Nabe-Verbindungen anwendbar sind. Sie realisieren die an sich bekannte vorteilhafte Axialsicherung einer Nabe mit einer Innennut. Dadurch unterliegt die Gestaltung der äußeren Form der Nabe keinerlei Einschränkungen, die durch die Anordnung von Außennuten für das Sicherungselement bedingt wären. Hinsichtlich der Welle ist die Anwendung der Erfindung ebenfalls in einer größeren Anwendungsbreite möglich. Voraussetzung ist lediglich, dass die Welle über eine breite Nut verfügt, die das jeweilige Sicherungselement aufnimmt. Die breite Nut kann auch durch lediglich einen nabenseitigen Absatz und ein auf der gegenüberliegenden Seite auf der Welle befestigtes Bauteil, z. B. ein Lager, gebildet werden. Durch die freie Gestaltung der Nut der Welle ist es möglich, die unterschiedlichsten Sicherungselemente zu verwenden. Sie müssen hinsichtlich ihrer Abmessungen und Eigenschaften wie die an sich bekannten Sicherungselemente ausgebildet sein, d. h. sie müssen längs geteilt sein, um sie auf einen gegenüber ihrem Innendurchmesser größeren Außendurchmesser der Welle aufschieben zu können. Sie müssen ferner elastisch verformbar sein, um nach dem Aufschieben auf die Welle in der Nut der Welle ihre Ausgangsform wieder einnehmen zu können, und ihr Innendurchmesser muss im montierten Zustand so viel größer als der Durchmesser des Nutgrundes sein, dass beim Aufschieben der Nabe auf die Welle das Maß der Überdeckung zwischen Sicherungselement und Nabe von der Nut der Welle aufgenommen wird.

Für die erfindungsgemäße Welle-Nabe-Verbindung müssen sie noch ein zusätzliches Merkmal aufweisen: Die Sicherungselemente müssen zumindest abschnittsweise so breit ausgelegt sein, dass sie aus der Nabe herausragen, d.h. noch zumindest einen Teil der Breite der Nut der Welle überdecken. In diesem von außen zugänglichen Bereich sind sie erfindungsgemäß so ausgelegt, insbesondere ihr Innendurchmesser so viel größer als der Durchmesser des Nutgrundes bemessen, dass sie sich im gefügten Zustand mit an sich üblichen Werkzeugen so weit zusammendrücken lassen, dass die in die Nut der Nabe eingerasteten Bereiche des Sicherungselements vollständig aus dieser Nut austreten, so dass die Well-Nabe-Verbindung ohne Beschädigung irgendeines Teils dieser Verbindung gelöst werden kann. Als Werkzeuge sind hierzu herkömmliche Zangen verwendbar.

Nach einer ersten Ausführungsform der Erfindung besteht das Sicherungselement aus einer axial geteilten Buchse, die im montierten Zustand über den von der Nabe überdeckten Bereich der Nut der Welle hinausragt. An ihrer der Nabe zugewandten Seite weist diese Buchse einen sich in radialer Richtung nach außen erstreckenden Bund auf, der im gefügten Zustand in die Nut der Nabe einrastet. Dieser Bund kann auch lediglich segmentweise ausgebildet sein. Dadurch vereinfacht sich die Demontage, da lediglich die Segmente des Bundes aus der Nut der Nabe entfernt werden müssen.

Nach einer diesbezüglich vorteilhaften Ausgestaltung der Erfindung weist der über die Nabe hinausragende Bereich der Buchse einen größeren Durchmesser auf als der unmittelbar an den Bund angrenzende Bereich. Dadurch steht bei der Demontage der Verbindungsanordnung für den zugänglichen Bereich der Buchse ein größerer radialer Verformungsweg zur Verfügung, so dass beim Zusammendrücken der Buchse mit einem Werkzeug der Bund auf alle Fälle vollständig aus der Nut der Nabe heraustritt.

Nach einer zweiten, besonders einfachen Ausführungsform der Erfindung besteht das Sicherungselement aus einem geteilten Federring in der Art eines Sprengrings, dessen infolge der Teilung freiliegenden Enden in radialer und axialer Richtung abgewinkelt sind. Die axiale Abwinkelung stellt quasi die Verbreiterung des Sicherungselements in axialer Richtung über die Nabe hinaus in die Nut der Welle dar. Hierbei muss selbstverständlich zunächst jedes Ende des Sicherungsrings so weit in Richtung der Rotationsachse der Welle abgewinkelt werden, dass es im gefügten Zustand aus der Nut der Nabe herausragt. Die axiale Abwinkelung der freien Enden muss mindestens so lang ausgeführt sein, dass die aus der Nabe hervorragenden Enden mit einem Werkzeug zusammengedrückt werden können. Diese Enden können selbstverständlich auch die gesamte Breite der Nut der Welle überragen bis sie an dem Wellenabsatz anstoßen. Diese Variante ist allerdings bei der Einwirkung axialer Druckkräfte auf die Nabe und/oder Welle für eine Axialsicherung nur bedingt geeignet, da diese Form der axialen Verbreiterung des Sicherungselements lediglich geringe Axialkräfte aufnehmen kann.

Nach einer dritten Ausführungsform der Erfindung besteht das Sicherungselement ebenfalls aus einer axial geteilten Buchse, die im montierten Zustand über den von der Nabe überdeckten Bereich der Nut der Welle hinausragt. Zusätzlich zu ihrer eigenen radialen Elastizität weist die Buchse an ihrem von der Nabe überdeckten Mantelbereich mehrere sich aus der Mantelfläche abspreizende Rastelemente auf. Sie erhalten dadurch quasi eine eigenständige Elastizität in radialer Richtung. Im gefügten Zustand rasten dann die ausgestellten freien Enden der Rastelemente in die Nut der Nabe ein. Die Rastelemente können sowohl radial als auch tangential aus dem Mantel der Buchse herausragen. Der Vorteil dieser unabhängig voneinander wirkenden elastischen Bereiche der Buchse besteht in einer größeren Gestaltungsfreiheit der Nuten von Welle und Nabe. Insbesondere sind die Nuttiefen voneinander unabhängig. Außerdem werden durch die abstehenden Rastelemente größere Überdeckungen zwischen Sicherungselement und Nabe erreicht. Auch bei dieser Variante kann der aus der Nabe hervorragende Mantelbereich der Buchse, wie zuvor beschrieben, einen größeren Durchmesser als der Bereich mit den Rastelementen aufweisen.

Nach einer diesbezüglich vorteilhaften Ausgestaltung der Erfindung liegt die Buchse mit ihrem Innendurchmesser an dem Außendurchmesser der Nut der Welle an. Die Buchse wird zum Aufstecken auf die Welle aufgeweitet und liegt nach dem Rückfedern mit ihrem Innendurchmesser an dem Außendurchmesser der Nut der Welle an. Beim Aufschieben der Nabe auf die Welle werden durch die konische Erweiterung der Nabenbohrung lediglich die Rastelemente in radialer Richtung elastisch verformt, um danach in die Nut der Nabe einzurasten. Dementsprechend werden bei der Demontage nur die Rastelemente an ihren aus der Nabe herausragenden Stegen gleichzeitig zusammengedrückt. Diese Variante hat den Vorteil, dass zwischen der Buchse und der Welle kein Spiel vorgesehen werden muss.

Nach einer besonders vorteilhaften Ausgestaltung der Erfindung ist in beiden Ausführungsformen der Buchsen deren Breite entsprechend der Breite der Nut der Welle ausgelegt, so dass die freie Stirnfläche der Buchsen an die Flanke der Nut angrenzt. So ausgelegte Buchsen sichern auch die axiale Position zwischen Welle und Nabe bei der Wirkung von Druckkräften auf Welle und/oder Nabe. Zur leichten Montage und Demontage der Buchse ist hier selbstverständlich ein gewisses Spiel zu gewährleisten. Der gleiche Vorteil wird auch dadurch erreicht, dass die Buchsen in einer Standardbreite, also unabhängig von der Breite der Nut der Welle, hergestellt werden und der verbleibende Zwischenraum durch eine einfache Zwischenbuchse ausgefüllt wird. Dadurch reduziert sich der Herstellungsaufwand der Sicherungsbuchsen weil sie in einer einheitlichen Breite und ohne eine enge Passung hergestellt werden können.

Nach einer ebenfalls vorteilhaften Ausgestaltung der Erfindung sind die Buchsen mit Ausnehmungen versehen. Durch diese sowohl Form und Masse der Buchsen gestaltenden Mittel lässt sich nicht nur ihre Masse verringern, sondern auch ihr Masseschwerpunkt so beeinflussen, dass bei der Rotation der Verbindungsanordnung keine Unwuchten auftreten. Vorteilhafterweise reduziert sich ferner durch die Ausnehmungen die zur Verformung der Buchsen erforderliche Kraft, wodurch die Demontage der Verbindungsanordnung erleichtert wird.

Schließlich können in einer besonders vorteilhaften Ausgestaltung der Erfindung die beiden an der Längsteilung des Sicherungsrings und der Buchsen sich gegenüberliegenden und unter der Nabe hervorstehenden freien Enden radial nach außen abgewinkelt sein. Diese Abwinkelungen dienen als Angriffsfläche für eine einfache Zange mit ebenen Angriffsflächen zur Demontage der Verbindungsanordnung. Das ermöglicht im Vergleich zu Werkzeugen, die ansonsten am Umfang der Buchsen angreifen würden und demzufolge eine gekrümmte Angriffsfläche benötigten, eine weitere Vereinfachung der Demontage.

Die nachfolgenden Erläuterungen beziehen sich ausschließlich auf die Ausgestaltung der Welle und der Nabe der Verbindungsanordnung:

So kann beispielsweise der Bereich der Nabe, der die Nut der Welle überragt, vorteilhafterweise einen geringfügig größeren Innendurchmesser aufweisen als der Fügebereich, in dem sie drehfest mit der Welle verbunden ist. Dadurch lässt sich die Nabe leichter über das Sicherungselement schieben, und die Nut in der Welle kann flacher ausgeführt sein.

Eine erleichterte Montage der Komponenten der Welle-Nabe-Verbindung wird auch dadurch erreicht, dass die der Nut der Welle zugewandte Öffnung der Nabe konisch erweitert ist. Auch das erleichtert die Montage der Komponenten der Welle-Nabe-Verbindung. Über die Wahl des Konuswinkels lässt sich die Fügekraft einstellen.

Wenn die Flanke der Nut der Welle, die sich im gefügten Zustand unterhalb der Nut der Nabe befindet, im Übergang zu dem angrenzenden Wellenabschnitt konisch ausgebildet ist, entsteht an dieser konischen Flanke aus einer auf die Nabe wirkenden Zugkraft eine radiale Kraftkomponente, die das Sicherungselement in Richtung der Nut der Nabe drückt, wodurch, ähnlich wie in der o. g. EP 2 053 256 A2, eine zuverlässige axiale Lagesicherung der Nabe erreicht wird, allerdings im Unterschied zu dieser technischen Lösung durch eine konstruktive Maßnahme an der Nutflanke der Welle. Die Konizität dieser Nutflanke kann auch durch einen Radius oder eine Kombination einer Schräge mit einem Radius gebildet werden.

An der Nabe und/oder Welle können Mittel vorgesehen sein, die die Position beider Teile zueinander gegen eine Verschiebung aufgrund von auf die Nabe und/oder Welle wirkenden Druckkräften sichern. Dadurch braucht das Sicherungselement selbst die axiale Position lediglich in einer Richtung abzusichern, nämlich dann, wenn die Welle-Nabe-Verbindung durch axiale Zugkräfte belastet wird. Zur Sicherung der Position von Welle und Nabe zueinander bei axialen Druckkräften können vorteilhafterweise bei Verbindungsanordnungen von Gelenkwellen an sich bekannte technische Mittel, beispielsweise ein zusätzlicher, lediglich in der erforderlichen axialen Richtung wirkender Sicherungsring genutzt werden.

Die Nabe der Welle-Naben-Verbindung kann wellenseitig auch eine mit ihr drehfest verbundene Hülse mit lediglich einer Nutflanke aufweisen, wobei Nabe und Hülse ein- oder mehrteilig ausgeführt sein können. Die Nutflanke wird quasi von einer Durchmesserreduzierung der Hülse an ihrer wellenseitigen Öffnung gebildet, die bei auf die Welle und/oder Nabe wirkenden Zugkräften gegen das Sicherungselement gedrückt wird. Auf diese Weise lassen sich Naben mit einer geringeren Masse herstellen.

Weitere Vorteile und vorteilhafte Ausgestaltungen der Erfindung sind der nachfolgenden Beschreibung, der Zeichnung und den Ansprüchen entnehmbar.

### Zeichnung

Ein Ausführungsbeispiel der Erfindung ist in den Zeichnungen dargestellt und im Folgenden näher beschrieben. In den Zeichnungen zeigen:
- Fig. 1: eine Welle-Nabe-Verbindung mit einem Sicherungsring,
- Fig. 2: den Sicherungsring in räumlicher Ansicht,
- Fig. 3: die Welle-Nabe-Verbindung aus Fig. 1 im montierten Zustand,
- Fig. 4: einen Schnitt durch die Welle-Nabe-Verbindung aus Fig. 3,
- Fig. 5: eine Welle-Nabe-Verbindung mit einer Bundbuchse,
- Fig. 6: die Bundbuchse in räumlicher Ansicht,
- Fig. 7: die Welle-Nabe-Verbindung aus Fig. 5 im montierten Zustand,
- Fig. 8: einen Schnitt durch die Welle-Nabe-Verbindung aus Fig. 7,
- Fig. 9: einen Schnitt durch eine Welle-Nabe-Verbindung, mit einseitiger Axialsicherung
- Fig. 10: eine Welle-Nabe-Verbindung mit einer Rastbuchse,
- Fig. 11: die Rastbuchse in räumlicher Ansicht,
- Fig. 12: die Welle-Nabe-Verbindung aus Fig. 10 im montierten Zustand und
- Fig. 13: einen Schnitt durch die Welle-Nabe-Verbindung aus Fig. 12.

### Beschreibung des Ausführungsbeispiels

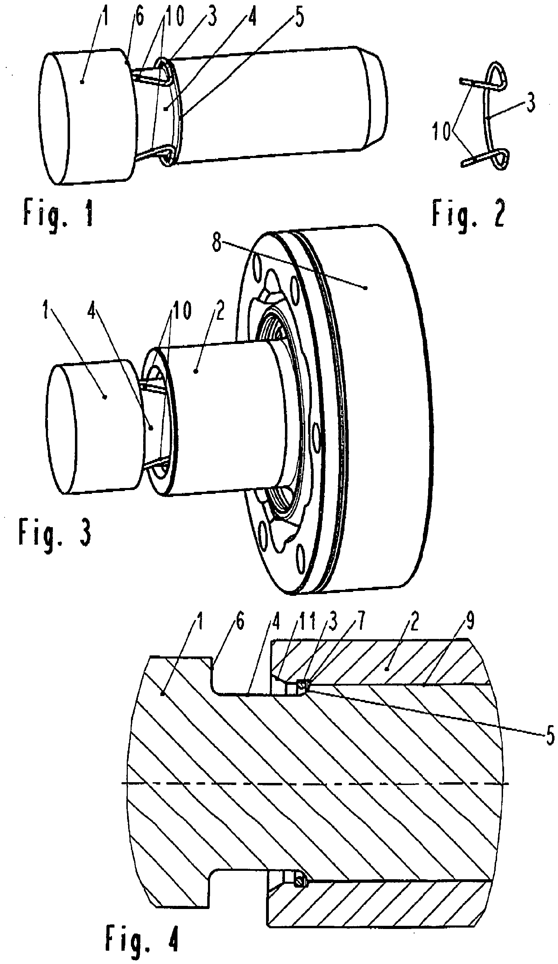

In den Fig. 1 bis 4 ist eine Verbindungsanordnung zwischen einer Welle 1 und einer Nabe 2 mittels eines Sicherungsrings 3 dargestellt. Die Welle 1 weist eine breite Nut 4 mit einer nabenseitig konisch ausgeführten Nutflanke 5 und einer gegenüberliegenden senkrecht zur Achse verlaufenden Nutflanke 6 auf. In die Nabe 2 ist eine schmale Innennut 7 eingearbeitet, deren Breite wenig größer ist als der Durchmesser des Sicherungsrings 3 und deren Tiefe etwa seinem Radius entspricht. Fig. 3 zeigt die Nabe 2, die mit einem Gelenk 8 drehfest verbunden ist. In den Fig. 1 und 4 wurde auf die Darstellung dieses Gelenks 8 aus Gründen einer besseren Übersichtlichkeit verzichtet. Axial anschließend an die konische Nutflanke 5 weist die Welle 1 ein Außenlängsprofil und die Nabe 2 im Anschluss an ihre Innennut 7 ein Innenlängsprofil auf. Im gefügten Zustand greifen Außen- und Innenlängsprofil formschlüssig zu einer drehfesten Verbindung 9 ineinander.

Der Sicherungsring 3 ist axial geteilt, wobei die Enden mit Abstand zueinander in axialer Richtung weitergeführt sind, so dass sie als freie Enden 10 aus der Ringebene hervorstehen. Die Abwinkelung ist im vorliegenden Beispiel nicht genau in axialer Richtung sondern in einem Winkel größer 90° erfolgt, um ein Kippen des Sicherungsrings 3 beim Aufschieben der Nabe 2 zu vermeiden. Zunächst sind die freien Enden 10 jedoch vor ihrer axialen Abwinkelung etwa um den Betrag der Nuttiefe der Nabe 2 in radialer Richtung abgewinkelt, so dass sie an dem Umfang eines gedachten Kreises anliegen würden, der einen kleineren Durchmesser als der Innendurchmesser des Sicherungsrings 3 aufweist. Dadurch können die freien Enden 10 im gefügten Zustand aus der Innennut 7 der Nabe 2 heraustreten und sich entlang der breiten Nut 4 der Welle 1 erstrecken. Die Länge der freien Enden 10 ist im vorliegenden Beispiel so gewählt, dass sie die gesamte Breite der Nut 4 überragen, also an der gegenüberliegenden senkrechten Nutflanke 6 anliegen.

Aus den Fig. 1 und 4 ist erkennbar, dass der Innendurchmesser des Sicherungsrings 3 im montierten Zustand größer als der Außendurchmesser der Nut 4 der Welle 1 und kleiner als der Außendurchmesser der Welle 1 ist. Aufgrund seiner Teilung kann er leicht über den größeren Wellendurchmesser geschoben werden und rastet unmittelbar hinter der konischen Nutflanke 5 in die breite Nut 4 der Welle 1 ein, wobei sich die freien Enden 10 an dem Nutgrund anlegen und an der gegenüberliegenden senkrechten Nutflanke 6 anstoßen. Die der Nut 4 zugewandte Stirnfläche der Nabe 2 ist mit einem Einführungskonus 11 versehen, der beim Aufschieben auf die Welle 1 den Sicherungsring 3 in die breite Nut 4 drückt. Sobald sich die Innennut 7 der Nabe 2 über der breiten Nut 4 der Welle 1 befindet, schnappt der Sicherungsring 3 in die Innennut 7 der Nabe 2 ein. Bei auf die Welle 1 und/oder Nabe 2 wirkenden Zugkräften wird deren axiale Lage zueinander dadurch gesichert, dass diese Zugekräfte den Sicherungsring 3 gegen die konische Nutflanke 5 der Welle 1 drücken. Durch die konische Ausbildung dieser Nutflanke 5 wirkt eine Komponente der Zugkräfte in radialer Richtung nach außen, so dass der Sicherungsring 3 in den Nutgrund der Innennut 7 der Nabe 2 gedrückt wird.

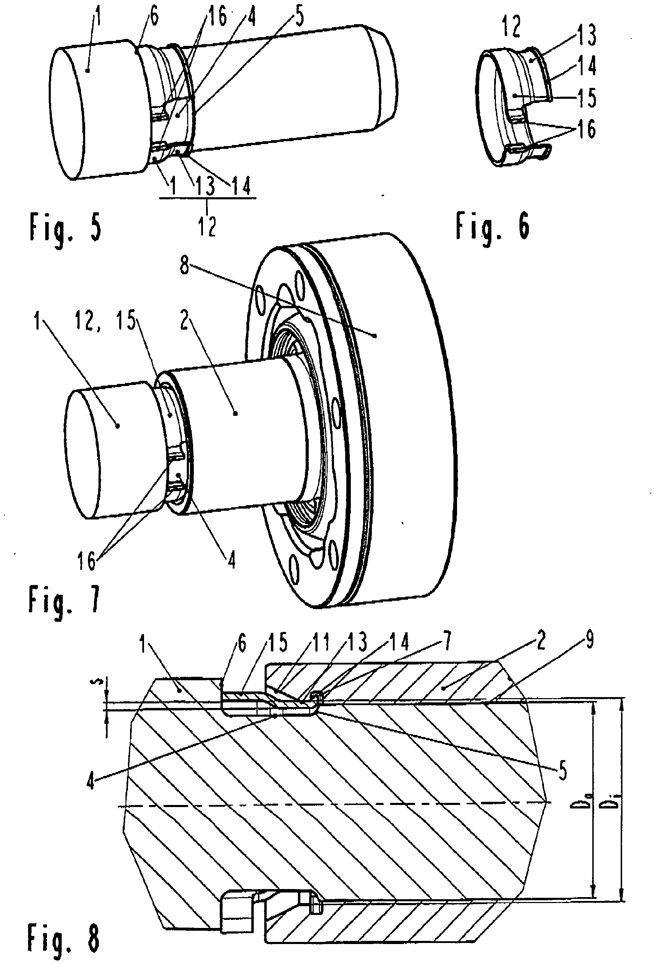

Bei einer anderen Ausführung ist in den Fig. 5 bis 8 eine Verbindungsanordnung zwischen der Welle 1 und der Nabe 2 mittels einer Bundbuchse 12 dargestellt. Die Abmessungen von Welle 1 und Nabe 2 sowie der Nut 4 der Welle 1 sind gleich denen der in den Fig. 1 bis 4 dargestellten Bauteilen. Im vorliegenden Beispiel weist die Nabe 2 zwischen Einführungskonus 11 und drehfester Verbindung 9 einen größeren Innendurchmesser Dᵢ auf als im Bereich der drehfesten Verbindung. Das elastisch verformbare Sicherungselement besteht bei diesem Ausführungsbeispiel aus einer axial geschlitzten Bundbuchse 12, die drei axial nebeneinanderliegende Funktionsbereiche mit unterschiedlichen Durchmessern aufweist. Ein erster Funktionsbereich, nämlich ein Anlagebereich 13, liegt im gefügten Zustand unmittelbar an dem vergrößerten Innendurchmesser Dᵢ der Nabe 2 an. Für eine zuverlässige Axialsicherung muss der Außendurchmesser Dₐ der Welle 1 größer sein als der um die doppelte Dicke s der Bundbuchse 12 in ihrem Anlagebereich 13 reduzierte Innendurchmesser Dᵢ der Nabe 2.

Der zweite Funktionsbereich der Bundbuchse 12 wird durch einen an der der Nabe 2 zugewandten Stirnseite angeordneten Bund 14 gebildet, dessen Außendurchmesser größer als der Außendurchmesser der Welle 1 ist, so dass er im gefügten Zustand in die Innennut 7 der Nabe 2 hineinragt.

Ein dritter Funktionsbereich schließt sich auf der dem Bund 14 gegenüberliegenden Seite des Anlagebereichs 13 an diesen an. Dieser als Montagebereich 15 bezeichnete Funktionsbereich ragt im gefügten Zustand aus der Nabe 2 in den Bereich der Nut 4 der Welle 1, hinein und weist einen größeren Durchmesser als der Anlagebereich 13 auf. Im vorliegenden Beispiel ist die Breite des Montagebereichs 15 so gewählt, dass er mit seiner freien Stirnfläche bis an die senkrechte Nutflanke 6 reicht, wobei sich die Bundbuchse 12 aber immer noch leicht in die Nut 4 der Welle 1 einfügen lässt. Eine so dimensionierte Bundbuchse 12 kann sowohl axiale Zug- als auch Druckkräfte aufnehmen, so dass sie die Sicherung der axialen Lage von Welle 1 und Nabe 2 zueinander in beiden axialen Richtungen gewährleistet. Dabei wirkt die konische Nutflanke 5 beim Auftreten von Zugkräften auf die Welle 1 und/oder Nabe 2 wie in den Ausführungen zu dem Sicherungsring 3 beschrieben in gleicher Weise, nämlich dass sie eine radiale Komponente der Zugkraft auf die Bundbuchse 12 überträgt, so dass Letztere mit ihrem zylindrischen Anlagebereich 13 gegen die Innenfläche und der Bund 14 in die Innennut der Nabe 2 gedrückt werden.

Die durch den Längsschlitz mit Abstand einander gegenüberliegenden freien Enden der Bundbuchse 12 weisen im Montagebereich 15 jeweils eine radial nach außen abgewinkelte Druckfläche 16 auf. Da der Montagebereich 15 im gefügten Zustand von außen zugänglich ist, kann an diesen Druckflächen eine Zange angreifen, um die Bundbuchse so weit zusammenzudrücken, dass der Bund 14 aus der Innennut 7 der Nabe 2 herausgleitet. Dadurch kann die Nabe 2 zerstörungsfrei von der Welle 1 abgezogen werden. Aufgrund dieser Funktion sind weitere Abmessungen der Bundbuchse 12 konstruktiv festgelegt, so beispielsweise das Verhältnis von Innendurchmesser der Bundbuchse 12 im Anlagebereich 13 und Außendurchmesser der Nut 4 der Welle 1. Letzterer muss mindestens um den doppelten Betrag des über den Außendurchmesser der Bundbuchse 12 im Anlagebereich 13 überstehenden Bundes 14 kleiner sein, damit der Bund 14 vollständig aus der Innennut 7 der Nabe 2 herausgedrückt werden kann.

Zur Montage wird die Bundbuchse 12 auf die Welle 1 aufgeschoben bis sie in deren Nut 4 einrastet. Beim Aufschieben der Nabe 2 drückt deren Einführungskonus 11 die Bundbuchse 12 in die Nut 4, wobei sich deren freie Enden annähern und die Bundbuchse 12 auf einen kleineren Durchmesser elastisch verformt wird. Sobald sich die Innennut 7 der Nabe 2 über der Nut 4 befindet, federt die Bundbuchse 12 wieder in ihre Ausgangslage zurück, wobei der Bund 14 in die Innennut 7 der Nabe 2 einrastet.

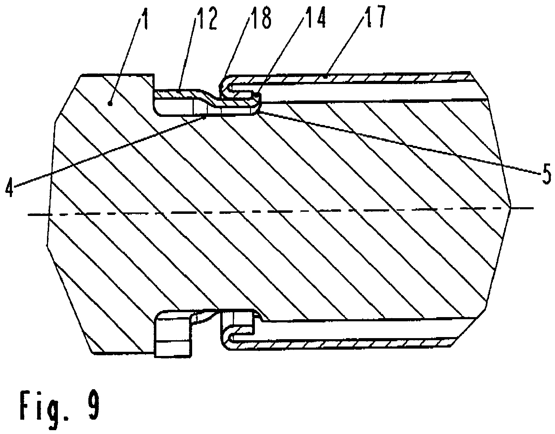

Fig. 9 zeigt einen Schnitt durch eine andere Variante einer Welle-Nabe-Verbindung, bei der die hier nicht näher dargestellte Nabe drehfest mit einer Hülse 17 verbunden ist und anderweitige, hier ebenfalls nicht näher dargestellte Mittel zur Lagesicherung zwischen Welle 1 und Nabe zur Aufnahme axialer Druckkräften vorgesehen bzw. konstruktiv bereits vorhanden sind. Die generell erforderliche Innennut der Nabe, in die das Sicherungselement im gefügten Zustand einrastet, wird hier lediglich durch eine Innenbördelung 18 an der der Nut 4 der Welle 1 zugewandten Stirnfläche der Hülse 17 gebildet. Diese Innenbördelung 18 bietet bei axialen Zugkräften sowohl die Nutflanke für den Anschlag des Bundes 14 als auch die Anlagefläche für den Anlagebereich 13 der Bundbuchse 12. Diese Variante hat den Vorteil, dass der Teil der Nabe, der die Axialsicherung gewährleistet, einfach in der Herstellung ist und auch sehr leicht gestaltet sein kann, wodurch sich die Masse der Welle-Nabe-Verbindung insgesamt reduzieren lässt. Ein weiterer Vorteil dieser zweiteiligen Gestaltung der Nabe besteht darin, dass durch Variation lediglich der Hülse 17 konstruktiv unterschiedliche Gestaltungen und Anwendungen von Welle-Nabe-Verbindungen auf einfache Weise realisiert werden können, ohne den Teil der Nabe, der mit der sich in der Drehmomentenübertragungskette anschließenden Komponente verbunden ist, verändern zu müssen.

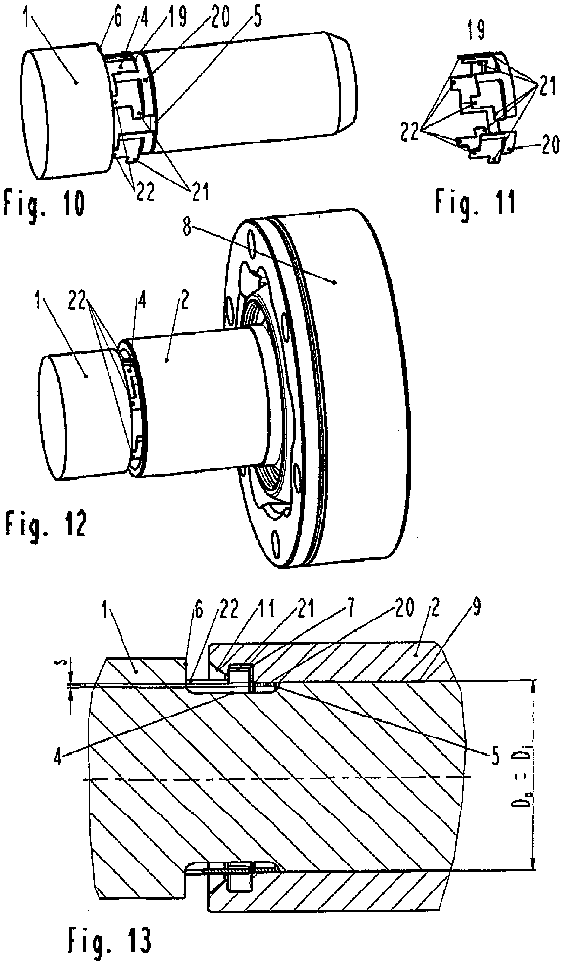

Eine dritte Ausführungsform einer Verbindungsanordnung zwischen der Welle 1 und der Nabe 2 ist in den Fig. 10 bis 13 dargestellt. Die Abmessungen von Welle 1 und Nabe 2 sowie der Nut 4 der Welle 1 sind gleich denen der in den Fig. 1 bis 8 dargestellten Bauteile. Im Unterschied zu den beiden vorherigen Ausführungsbeispielen ist jedoch die Innennut 7 deutlich breiter und tiefer ausgebildet als jene der in diesen Ausführungsbeispielen dargestellten Naben 2.

Das elastisch verformbare Sicherungselement besteht bei diesem Ausführungsbeispiel aus einer axial geschlitzten Rastbuchse 19 mit beabstandeten freien Enden, die ebenfalls drei Funktionsbereiche aufweist. Ein erster ist durch den lediglich durch den Schlitz unterbrochenen zylindrischen Mantelbereich 20 gebildet, der sich von der der Nabe 2 zugewandten Stirnseite axial in Richtung der Nut 4 der Welle 1 erstreckt. Mit diesem liegt die Rastbuchse 19 im gefügten Zustand an der Innenfläche der Nabe 2 an, und zwar in dem Bereich der Innenfläche, der sich zwischen der konischen Nutflanke 5 und der Innennut 7 der Nabe 2 befindet. Wie auch schon im Beispiel der Bundbuchse 12 beschrieben, muss für eine zuverlässige Axialsicherung der Außendurchmesser Dₐ der Welle 1 größer sein als der um die doppelte Dicke s der Rastbuchse 19 in ihrem zylindrischen Mantelbereich 20 reduzierte Innendurchmesser Dᵢ der Nabe 2. Das ist auch dann zutreffend, wenn, wie im vorliegenden Beispiel, Dₐ und Dᵢ gleich groß sind.

Der zweite Funktionsbereich wird aus dem sich in axialer Richtung an den zylindrischen Mantelbereich 20 anschließenden Umfangsbereich der Rastbuchse 19 gebildet. Aus diesem sind Rastelemente 21 mit einer Breite, die im vorliegenden Beispiel der Breite der Innennut 7 der Nabe 2 entspricht, tangential ausgestellt.

Der dritte Funktionsbereich der Rastbuchse 19 wird durch Stege 22 gebildet, die sich von den Rastelementen 21 in axialer Richtung über die restliche Breite der Nut 4 der Welle 1 hinaus erstrecken, so dass sie im gefügten Zustand aus der Nabe 2 hervortreten und bis zur senkrechten Nutflanke 6 ragen. Die Gesamtbreite der Rastbuchse 19 muss, ebenso wie die Breite der Bundbuchse 12, so dimensioniert sein, dass die Rastbuchse 19 sich immer noch leicht in die Nut 4 der Welle 1 einfügen lässt. Da die Stege 22 an der senkrechten Nutflanke 6 anliegen, ist die Rastbuchse 19 zur Aufnahme sowohl axialer Zug- als auch Druckkräfte geeignet, so dass sie die Sicherung der axialen Lage von Welle 1 und Nabe 2 zueinander in beiden axialen Richtungen gewährleistet. Dabei wirkt die konische Nutflanke 5 beim Auftreten von Zugkräften auf die Welle 1 und/oder Nut 2 wie in den Ausführungen zu dem Sicherungsring 3 und der Bundbuchse 12 beschrieben in gleicher Weise, nämlich, dass sie eine radiale Komponente der Zugkraft auf die Rastbuchse 19 überträgt, so dass Letztere mit ihrem zylindrischen Mantelbereich 20 gegen die Innenfläche der Nabe 2 gedrückt wird.

Die aus der Nabe 2 herausragenden Stege 22 sind für den Angriff eines Werkzeugs frei zugänglich. Durch radiales Zusammendrücken dieser Stege 22 werden die Rastnasen 21 aus der Innennut 7 der Nabe 2 herausgedrückt, so dass die Nabe 2 ohne Beschädigung eines Teils der Verbindungsanordnung von der Welle 1 gezogen werden kann.

Die Montage der Rastbuchse 19 erfolgt in gleicher Weise wie die der Bundbuchse 12.

Alle in der Beschreibung, den nachfolgenden Ansprüchen und der Zeichnung dargestellten Merkmale können sowohl einzeln als auch in beliebiger Kombination miteinander erfindungswesentlich sein.

### Bezugszahlenliste

- 1: Welle
- 2: Nabe
- 3: Sicherungsring
- 4: Breite Nut
- 5: Konische Nutflanke
- 6: Senkrechte Nutflanke
- 7: Innennut
- 8: Gelenk
- 9: Drehfeste Verbindung
- 10: Freie Enden
- 11: Einführungskonus
- 12: Bundbuchse
- 13: Anlagebereich
- 14: Bund
- 15: Montagebereich
- 16: Druckfläche
- 17: Hülse
- 18: Innenbördelung
- 19: Rastbuchse
- 20: Zylindrischer Mantelbereich
- 21: Rastelement
- 22: Steg
- Dᵢ: Innendurchmesser der Nabe
- Da: Außendurchmesser der Welle
- s: Dicke der Bundbuchse

## Patentansprüche

1. Verbindungsanordnung für Welle-Nabe-Verbindung, bei der zur Sicherung der axialen Lage von Welle und Nabe zueinander, die im gefügten Zustand drehfest miteinander verbunden sind, ein in Längsrichtung geteiltes radial elastisch verformbares Sicherungselement in Nuten (4, 7) von Welle (1) und Nabe (2) formschlüssig eingreift, wobei die Nut (4) der Welle (1) in axialer Richtung über die Nabe (2) hinaus verbreitert und die sich im gefügten Zustand unterhalb der Nut (7) der Nabe (2) befindliche Flanke (5) der Nut (4) der Welle (1) in Richtung des Übergangs zu dem angrenzenden Wellenabschnitt konisch erweitert ist, und das Sicherungselement zumindest abschnittsweise von seiner der Nabe (2) abgewandten Seitenfläche ausgehend in axialer Richtung über die Nabe (2) hinaus in die Nut (4) der Welle (1) hineinragend verbreitert ist,
**dadurch gekennzeichnet,**
**dass** das Sicherungselement aus einer axial geteilten Buchse (12) besteht, die an ihrer der Nabe (2) zugewandten Stirnseite einen sich in radialer Richtung nach außen erstreckenden Bund (14) aufweist, der im gefügten Zustand in die Nut (7) der Nabe (2) einrastet.

2. Verbindungsanordnung nach Anspruch 1,
**dadurch gekennzeichnet,**
**dass** der Bund (14) lediglich segmentweise ausgebildet ist.

3. Verbindungsanordnung nach Anspruch 1, oder 2,
**dadurch gekennzeichnet,**
**dass** der über die Nabe (2) hinausragende Bereich der Buchse (12) einen größeren Durchmesser aufweist als der unmittelbar an den Bund (14) angrenzende Bereich.

4. Verbindungsanordnung nach einem der Ansprüche 1 bis 3,
**dadurch gekennzeichnet,**
**dass** die freien Enden der Buchse (12), die im gefügten Zustand unter der Nabe (2) hervorstehen, radial nach außen abgewinkelt sind.

5. Verbindungsanordnung nach einem der Ansprüche 1 bis 4,
**dadurch gekennzeichnet,**
**dass** die Buchse (12) in ihrem Mantelbereich Ausnehmungen aufweisen.

6. Verbindungsanordnung für Welle-Nabe-Verbindung, bei der zur Sicherung der axialen Lage von Welle und Nabe zueinander, die im gefügten Zustand drehfest miteinander verbunden sind, ein in Längsrichtung geteiltes radial elastisch verformbares Sicherungselement in Nuten (4, 7) von Welle (1) und Nabe (2) formschlüssig eingreift, wobei die Nut (4) der Welle (1) in axialer Richtung über die Nabe (2) hinaus verbreitert und die sich im gefügten Zustand unterhalb der Nut (7) der Nabe (2) befindliche Flanke (5) der Nut (4) der Welle (1) in Richtung des Übergangs zu dem angrenzenden Wellenabschnitt konisch erweitert ist, und das Sicherungselement zumindest abschnittsweise von seiner der Nabe (2) abgewandten Seitenfläche ausgehend in axialer Richtung über die Nabe (2) hinaus in die Nut (4) der Welle (1) hineinragend verbreitert ist,
**dadurch gekennzeichnet,**
**dass** das Sicherungselement aus einem Sicherungsring (3) besteht, dessen freiliegenden Enden durch eine radiale und axiale Abwinkelung über die Nabe (2) hinaus in die Nut (4) der Welle (1) hineinragend verlängert sind.

7. Verbindungsanordnung nach Anspruch 6,
**dadurch gekennzeichnet,**
**dass** der Sicherungsring (3) lediglich an der der Nabe (2) zugewandten Nutflanke (5) anliegt und an der Welle (1) und/oder Nabe (2) Mittel vorgesehen sind, die die Position beider Teile zueinander gegen eine Verschiebung aufgrund von auf die Welle (1) und/oder Nabe (2) wirkenden Druckkräften sichern.

8. Verbindungsanordnung nach Anspruch 6 oder 7,
**dadurch gekennzeichnet,**
**dass** die axiale Abwinkelung der freien Enden (10) des Sicherungsrings (3) die gesamte Breite der Nut (4) der Welle (1) überragt.

9. Verbindungsanordnung nach einem der Ansprüche 6 bis 8,
**dadurch gekennzeichnet,**
**dass** die freien Enden des Sicherungsrings (3), die im gefügten Zustand unter der Nabe (2) hervorstehen, radial nach außen abgewinkelt sind.

10. Verbindungsanordnung für Welle-Nabe-Verbindung, bei der zur Sicherung der axialen Lage von Welle und Nabe zueinander, die im gefügten Zustand drehfest miteinander verbunden sind, ein in Längsrichtung geteiltes radial elastisch verformbares Sicherungselement in Nuten (4, 7) von Welle (1) und Nabe (2) formschlüssig eingreift, wobei die Nut (4) der Welle (1) in axialer Richtung über die Nabe (2) hinaus verbreitert und die sich im gefügten Zustand unterhalb der Nut (7) der Nabe (2) befindliche Flanke (5) der Nut (4) der Welle (1) in Richtung des Übergangs zu dem angrenzenden Wellenabschnitt konisch erweitert ist, und das Sicherungselement zumindest abschnittsweise von seiner der Nabe (2) abgewandten Seitenfläche ausgehend in axialer Richtung über die Nabe (2) hinaus in die Nut (4) der Welle (1) hineinragend verbreitert ist,
**dadurch gekennzeichnet,**
**dass** das Sicherungselement aus einer axial geteilten Buchse (19) besteht, die an ihrem Mantelbereich, der sich im gefügten Zustand noch unter der Nabe (2) befindet, mehrere sich abspreizende Rastelementen (21) aufweist, die im gefügten Zustand in die Nut (7) der Nabe (2) einrasten.

11. Verbindungsanordnung nach Anspruch 10,
**dadurch gekennzeichnet,**
**dass** die Buchse (19) im gefügten Zustand mit ihrem Innendurchmesser an dem Außendurchmesser der Nut (4) der Welle (1) anliegt und der in axialer Richtung über die Nabe (2) hinausragende Mantelbereich der Buchse (19) durch Stege (22) gebildet wird, die mit den Rastelementen (21) verbunden sind.

12. Verbindungsanordnung nach Anspruch 10 oder 11,
**dadurch gekennzeichnet,**
**dass** die Breite der Buchse (19) gleich der Breite der Nut (4) der Welle (1) ist.

13. Verbindungsanordnung nach einem der Ansprüche 10 bis 12,
**dadurch gekennzeichnet,**
**dass** die freien Enden der Buchse (19), die im gefügten Zustand unter der Nabe (2) hervorstehen, radial nach außen abgewinkelt sind.

14. Verbindungsanordnung nach einem der Ansprüche 10 bis 13,
**dadurch gekennzeichnet,**
**dass** die Buchse (19) in ihrem Mantelbereich Ausnehmungen aufweist.
